Europäisches Patentamt

European Patent Office

Office européen des brevets

(19)

(11) Numéro de publication: **0 270 427**
**B1**

(12) **FASCICULE DE BREVET EUROPEEN**

(45) Date de publication du fascicule du brevet: **30.01.91**

(51) Int. Cl.⁵: **C 08 J 3/24,** C 09 D 4/02, C 08 F 8/00

(21) Numéro de dépôt: **87402564.6**

(22) Date de dépôt: **13.11.87**

(54) **Procédé de réticulation.**

(30) Priorité: **14.11.86 FR 8615843**

(43) Date de publication de la demande:
**08.06.88 Bulletin 88/23**

(45) Mention de la délivrance du brevet:
**30.01.91 Bulletin 91/05**

(84) Etats contractants désignés:
**AT BE CH DE ES GB GR IT LI LU NL SE**

(56) Documents cités:
**EP-A-0 008 125**
**EP-A-0 129 394**
**DE-A-2 441 507**
**FR-A-2 298 576**

(73) Titulaire: **NORSOLOR S.A.**
**Tour Aurore Place des Reflets**
**F-92080 Paris la Défense Cédex 5 (FR)**

(72) Inventeur: **Fourquier, Dominique**
**38, rue des Veneurs**
**F-60610 La Croix St Ouen (FR)**
Inventeur: **Perronin, Jean**
**3, Résidence "La Normandie" Apremont**
**F-60300 Senlis (FR)**

(74) Mandataire: **Rieux, Michel**
**c/o NORSOLOR Service Propriété Industrielle**
**B.P. 57**
**F-62670 Mazingarbe (FR)**

Courier Press, Leamington Spa, England.

## Description

La présente invention a pour objet un procédé de réticulation notamment dans le domaine des résines (métha) acryliques.

Le procédé selon l'invention trouve son application pour la préparation de pièces moulées, d'imprégnation, d'enduction, d'impression, d'adhésifs, de liants, d'apprêts, de peintures et de vernis.

Dans ces dernières applications, depuis que les matières plastiques sont associées aux pièces métalliques, notamment dans le cas des carrosseries pour l'automobile, il est extrêmement souhaitable de disposer de compositions de revêtement réticulables à basses températures et essentiellement à des températures inférieures aux températures d'altération de ces matières plastiques.

Jusqu'à présent, dans le domaine des peintures et revêtements thermodurcissables, on a utilisé toutes sortes de polymères et polycondensats sous forme de solutions, de dispersions ou de poudres. A titre d'exemple, on peut citer les résines alkydes les polyesters, les résines, acryliques, les résines époxydes obtenues, par exemple, par condensation de dérivés du Bis-phénol ou de polyoxyalkylèneglycol avec l'épichlorhydrine, les polyuréthannes préparés à partir de polyols et d'isocyanates, les polyamides, etc. . .

Parmi celles-ci, les résines époxydes et plus spécialement les époxy des aromatiques sont connues pour être très sensibles à l'action de la lumière et des intempéries. Les résines mettant en oeuvre des isocyanates, admis comme très toxiques, posent, quant à elles, des problèmes à l'utilisation.

Parmi les autres, on a porté un intérêt particulier aux résines acryliques présentées sous forme de dispersion, mais plus généralement en solution dans des solvants organiques. Appliquées à hautes températures (généralement entre 130°C et 200°C durant 30 minutes environ) elles permettent d'obtenir des revêtements dotés, non seulement de bonnes caractéristiques mécaniques, mais également de bonnes propriétés, de durabilité, de résistance aux intempéries, à l'eau, aux solvants et aux agents chimiques en général.

Malheureusement, les revêtements ainsi obtenus, réticulés à basses températures, par exemple à 90°C durant 30 minutes, sont relativement sensibles à l'action prolongée de l'eau et ne conviennent pas pour les applications précitées.

Pour pallier cet inconvénient des copolymères acryliques préparés à partir d'acrylate ou méthacrylate de glycidyle ont été revendiqués. Ces copolymères sontréticulés, par mélange, avec des "agents de réticulation", tels que: les diacides ou polyacides carboxyliques mentionnés dans les brevets US 2 857 354 ou Fr 2 149 409, les anhydrides de diacides cités dans le brevet BE 819 623, les résines phénolformol, polyamide ou urée formol signalées dans le brevet US 3 058 947, ou les résines comportant des groupes amines, amides, acides ou thiols mentionnées dans le brevet EP O 129 394. Généralement, ces réticulations sont favorisées par la présence, dans ce mélange, de catalyseurs connus tels que les sels de tétraalcoylammonium, les dérivés d'imidazole, les amines tertiaires, ou les sels d'acides carboxyliques. Ces compositions appliquées en couches minces sur des substrats métalliques, conduisent après traitement thermique à basse température, à des revêtements dont la tenue à l'eau est en effet relativement bonne. Malheureusement, la réticulation étant incomplète dans ces conditions, la tenue aux solvants est insuffisante. En outre, et surtout, les compositions réalisées à l'aide des mélanges précédents évoluent dans le temps et finissent par prendre, assez rapidement, en masse dans le pot.

Pour améliorer la réactivité de ces systèmes, il a été réalisé des copolymères d'acrylate ou méthacrylate de glycidyle dans lesquels ces monomères sont copolymérisés avec des monomères fonctionnels porteurs de fonctions hydroxy, carboxy, anhydride, amine ou amide pour les rendre "auto-réticulables", c'est-à-dire réticulables en l'absence d'agents de réticulation.

Dans ce cas, la réticulation pouvant alors s'effectuer en l'absence des "agents de réticulation" indiqués ci-dessus, il est possible de préparer des compositions de revêtement simplifiées, par mélange de ces copolymères avec les catalyseurs connus, donc sans agents de réticulation. Ces compositions conduisent à des revêtements dotés de bonnes tenues à l'eau et aux solvants qui présentent en outre de bonnes caractéristiques générales. Malheureusement, la stabilité de la composition est limitée à quelques heures, après quoi elle se prend en masse dans le pot.

Or, il a été trouvé un procédé permettant de réaliser cette auto-réticulation sans problème de prise en masse dans le pot et de préparer des revêtements de très bonne qualité.

Plus précisément l'invention a pour objet un procédé de réticulation de copolymères autoréticulables, à base de monomères (méth) acryliques essentiellement, caractérisé en ce que sur ou avant dépôt d'une couche contenant au moins un catalyseur de réticulation, on applique une seconde couche contenant au moins un copolymère auto-réticulable, en suspension ou en solution dans un milieu aqueux ou dans un solvant organique, et en ce qu'on soumet ces deux couches à un traitement thermique de manière à provoquer la réticulation de la couche contenant le ou les copolymères. La température de ce traitement thermique est de préférence comprise entre 30 et 110°C, et de préférence encore entre 60 et 90°C.

Dans le procédé selon l'invention, il a été surprenant de constater que, malgré les basses températures mises en oeuvre et l'hétérogénéité du système, la réaction de catalyse s'initie à l'interface et provoque la réticulation de la totalité de la couche du copolymère. Les revêtements ainsi obtenus ont une excellente tenue à l'eau et aux solvants et présentent, en outre, de bonnes caractéristiques générales.

Il a été trouvé également que le procédé selon l'invention conduit à d'aussi bon résultats que la couche contenant le catalyseur soit située dessus ou dessous la couche contenant le copolymère auto-réticulable.

Le procédé selon l'invention est applicable à un système comprenant plusieurs couches (A) contenant un ou plusieurs copolymères auto-réticulables, les copolymères dans chacune de ces couches (A) étant identiques ou différents. Il suffit pour cela d'interposer entre chacune de ces couches (A) une intercouche contenant au moins un catalyseur de réticulation et de soumettre ensuite le système ainsi obtenu à un traitement thermique, à une température comprise entre 30 et 110°C, préférentiellement entre 60 et 90°C, de manière à réaliser la réticulation des copolymères auto-réticulables.

De préférence, avant d'appliquer une nouvelle couche, qui est selon le cas une couche contenant le catalyseur de réticulation ou le copolymère auto-réticulable, on effectue le séchage de la couche précédemment déposée.

Les couches contenant le copolymère auto-réticulable sont présentées sous forme de solution ou de dispersion dudit copolymère en milieu solvant ou aqueux.

De préférence, les copolymères auto-réticulables utilisables dans le procédé selon l'invention sont obtenus à partir de:

5 à 40% en poids d'un ou plusieurs monomères possédant une liaison éthylénique et au moins un groupe glycidyle.

1 à 20% en poids d'un ou plusieurs monomères possédant une liaison éthylénique et un ou plusieurs groupes fonctionnels tels que les groupes hydroxys, carboxyles, amines, amines mono et disubstituées, amides, amides mono et disubstituées, sulfoniques, aldéhydes, anhydrides,

94 à 40% en poids d'un ou plusieurs comonomères possédant au moins une double liaison éthylénique.

Ces copolymères ont une masse moléculaire moyenne en poids mesurée par chromatographie par perméation de gel comprise entre 1 000 et 80 000, préférentiellement entre 10 000 et 50 000.

Ces copolymères ont une témperature de transimion comprise entre 0°C et 80°C, préférentiellement entre 20°C et 50°C.

La teneur en matières sèches de ces solutions ou dispersions est comprise entre 30% et 80% en poids, préférentiellement entre 50 et 60% et la viscosité est comprise entre 5 et 5 000 poises, préférentiellement entre 10 et 500 poises exprimée à 60% en poids de matières sèches.

Les copolymères ci-dessus sont obtenus selon des procédés connus, en solution, en émulsion, en suspension ou en masse. La réaction de copolymérisation peut être initiée par des catalyseurs anioniques, cationiques ou par des catalyseurs ou rayonnements capables de produire des radicaux libres. La copolymérisation peut être conduite de façon continue, discontinue, incrémentale, ou programmée, à des températures variées, comprises par exemple entre 40°C et 160°C selon les monomères et les catalyseurs mis en oeuvre. Préférentiellement, dans la présente invention, on a opéré en milieu solvant et par voie radicalaire.

Dans ces conditions, pour initier la réaction de copolymérisation, on utilise des composés peroxygénés tels que le peroxyde de benzoyle, le peroxyde lauroyle, le peroxydicarbonate de bis (4 terbutylcyclohexyle), le perdecanoate de tertiobutyle, le perbenzoate de tertiobutyle, le perpivalate de tertiobutyle, le peroxyde méthyléthylcétone, l'hydroperoxyde de tertiobutyle, le peroxyde de tertiobutyle, l'acide peracétique ou des oxydes d'amine. On utilise aussi comme initiateurs des composés azo tels que l'azo-22' bis isobutyronitrile, l'acide azo-44' bis (cyano-4 pentanoïque), l'azo-22' bis (24-diméthyl valeronitrile) ou des systèmes Redox tels que les couples peroxyde de lauroyle — acétyl acétone ou 2-3 butane dione, perpivalate de tertiobutyle — octoate de cobalt, peroxyde de benzoyle — diméthylparatoluidine. Les quantités de catalyseur à mettre en oeuvre varient dans de larges limites, par exemple entre 0,5 et 8% par rapport au poids de monomères à copolymériser, de préférence entre 2 et 5%.

Pour régler la masse moléculaire des copolymères selon l'invention et la viscosité de leur solution, on peut utiliser lors de leur préparation des agents de transfert connus de l'homme de l'art, tels que les alkylmercaptans comme le tertio dodecylmercaptan, le N-dodecylmercaptan, l'acide thioglycolique, ou tels que le tétrachlorure de carbone, le tétrabromure de carbone, le triphénylméthane. Les quantités à mettre en oeuvre sont fonction des valeurs de masse moléculaire à obtenir et peuvent aller jusqu'à 5% par rapport au poids de monomères, et varier de préférence entre 0,1 et 1%.

Le taux de matières sèches des dispersions ou solutions de copolymères qui constituent les couches utilisables dans la présente invention peut varier dans de très larges limites, par exemple de 30 à 80%, préférentiellement entre 50 et 60%, mais il est avantageux d'avoir à sa disposition des produits dont le taux de matières sèches est très élevé.

Comme monomères monoéthyléniques possédant au moins un groupe glycidyle, on peut citer par exemple l'acrylate de glycidyle, le méthacrylate de glycidyle, le crotonate de glycidyle, le maléate de diglycidyle, le fumarate de diglycidyle, l'itaconate de diglycidyle, l'éther allyle glycidyle, le diglycidyle monoacryloyl isocyanurate, le diglycidyle monoallyl isocyanurate.

Par monomères monoéthyléniques possédant un ou plusieurs groupes fonctionnels, on entend certains monomères possédant au moins un groupe capable de réagir éventuellement avec un autre monomère, un autre composé, ou avec le substrat lui-même pour établir une réticulation. Ces groupes réactifs sont bien connus et peuvent être par exemple les groupes OH, $NH_2$, NH-alkyl, N-dialkyl, $CONH_2$, CONH-alkyl, CON-dialkyl, COOH, CO-O-OC (anhydride), $SO_3H$, CHO. Comme exemple de tels monomères, on peut citer les acrylates et méthacrylates hydroxyalkyliques comme le mono acrylate d'éthylène glycol, le monométhacrylate de propylène glycol et le mono acrylate de butane diol; l'allyloxyéthanol, l'alcool allylique, le N-(hydroxyméthyl) acrylamide, l'allylamine, l'acrylate et méthacrylate de diméthylaminoéthyle, l'acrylate de diéthylaminoéthyle, l'acrylate de diméthylaminopentyle, le vinylpyridine, le vinylimidazole, le vinyl-1 méthyl-2 imidazole, le vinylcarbazole, le vinylcaprolactame, la vinylpyrolidone, l'acrylamide et méthacrylamide, la N-(isobutoxyméthylacrylamide), la N-isopropylacrylamide, le méthylacrylamidoglycolate méthyléther, l'acide acrylique, l'acide méthacrylique, l'acide sénécioïque, l'acide-4 pentenoique (3), l'acide itaconique, l'acide crotonique, l'acide allylglycolique, l'acide-10 undecenoï-'que, l'anhydride maléïque, l'anhydride citraconique, l'acide vinylsulfonique, l'acide styrène para sulfonique, l'acroléïne.

Comme monomères utilisables comme comonomères avec les précédents et possédant une ou plusieurs liaisons éthyléniques, on peut essentiellement utiliser des esters acryliques ou méthacryliques tels que acrylate ou méthacrylates de méthyle, d'éthyle, de butyle, d'isobutyle, de tertiobutyle d'hexyle, d'éthyle-2 hexyle, de lauryle, de stéaryle, de cyclohexyle, de benzyle, de phényle, de norbornyle, de méthoxyéthyle, d'éthyldiglycol, de tert.butylcyclohexanol, de B-phényléthyle, de tétrahydrofurfuryle, de dihydro dicyclo pentadienyle, de dibromopropyle, de N-méthyl-N (perfluorooctyl)-2 éthyl sulfonyl amino-2 éthyle, de trifluoroéthyle, de perfluorohexyl)-2 éthyle, ainsi que l'acrylonitrile, le méthacrylonitrile, le chlorure de 2-triméthyle ammonium éthyle acrylate. On peut également utiliser d'autres monomères tels que les dérivés vinyliques: l'acétate de vinyle, le propionate de vinyle, l'isobutyrate de vinyle, le sénécioate de vinyle, le laurate de vinyle, l'octanoate de vinyle, l'éthyl-2 hexanoate de vinyle, l'éther vinylméthylique, l'éther vinyléthylique, l'éther vinylisobutylique, l'éther vinyloctadecylique, le chlorure de vinyle, le chlorure de vinylidène, les esters vinyliques des acides connus sur le marché sous le nom des acides versatiques. On peut également utiliser des hydrocarbures halogénés ou non tels que l'éthylène, le propylène, l'isobutylène, le styrène, 1'α-méthylstyrène, le vinyltoluène, 1'α-cyanométhylstyrène. On peut enfin utiliser en faible quantité des monomères contenant plusieurs fonctions éthyléniques tels que le méthacrylate d'allyle, le diméthacrylate d'éthylèneglycol, le diméthacrylate de butanediol-1,4, le triméthacrylate de triméthylolpropane, le diacrylate d'hexanediol, le tétra-acrylate de pentaérythrite, le butadiène, le chlorobutadiène, le divinylbenzène, l'isocyanurate de triallyle.

Comme mentionné plus haut, on effectue la copolymérisation en solution, en utilisant un ou plusieurs solvants dans lesquels le copolymère est soluble. C'est ainsi qu'on peut utiliser des solvants tels que le toluène, le xylène, le méthyléthylcétone, l'acétate d'éthylglycol, l'isopropanol, le butanol, le trichloréthane, le méthylisobutylcar-binol, l'acétate de butyle, le méthylglycol et l'éthyl glycol, le dibutyléther, le méthylcyclohexane, le 2-nitropropane, l'heptane, le white spirit, le cumène, en mélange ou non.

La couche contenant le ou les catalyseurs de réticulation peut éventuellement contenir un ou plusieurs solvants et/ou d'autres copolymères, condensats, résines ou liants, naturels ou synthétiques ou tout autre matériau susceptible de ne pas gêner la migration du catalyseur vers les couches adjacentes qui contiennent des copolymères auto-réticulables.

Ce sont par exemple, des copolymères vinyliques ou acryliques, des résines alkydes, des résines polyesters, des polyamides, des dérivés de cellulose comme les acétates ou les acéto-butyrates de cellulose, des carboxy ou alkylcellulose, nitrocellulose, ou des gommes naturelles comme la gomme laque et les dérivés de la colophane.

Les solvants utilisables dans la couche contenant le catalyseur de réticulation sont, par exemple, les mêmes que ceux utilisés dans la couche contenant le copolymère auto-réticulable, ou sont différents.

Les quantités de catalyseurs de réticulation à mettre en oeuvre dans le procédé selon l'invention sont de préférence comprises entre 0,1 et 10% en poids parrapport à la quantité des copolymères auto-réticulables.

Les catalyseurs de réticulation convenant au procédé selon l'invention, qui favorisent la réticulation des copolymères auto-réticulables à basse température sont généralement des sels de tétraalcoylphosphonium, des dérivés d'imidazole, des amines tertiaires, des dérivés du bore, ou des sels d'acides carboxyliques. A titre d'exemple, on peut citer: le bromure de tétrabutylphosphonium, le bromure de tétraphénylphosphonium, le chlorure de 4-(hydroxyméthyl)imidazole, l'imidazole ou glyoxaline, le méthyl-2 imidazole, le méthyl-1 imidazole, le méthyle-4 imidazole, le diméthyl-24 imidazole, l'éthyl-2 méthyl-4 imidazole, undécyl-2 imidazole, le phényl-2 méthyl-4 imidazole, le benzyl-1 méthyl-2 imidazole, le cyanoéthyl-1 phényl-2 imidazole trimellitate, le diamino-2,4 (éthyl-2' méthyl-4' imidazole (1') 2-éthyl-s-triazine, le cyanoéthyl-1 phényl-2 di(cyanoéthoxyméthyl)-4,5 imidazole, le phosphate de 2 (N-(benzyl anilino)-méthyl -2 imidazoline, le chlorhydrate de 2 benzyl-2 imidazoline, la benzimidazole, le mercapto benzimidazole, le 2-mercapto thiazoline, la piperazine, la N-méthylmorpholine, la NN'-diéthylcyclohexylamine, la NN-diméthylbenzylamine, la dicyanidiamide, la triphényle phosphine, le tri-fluorure de bore, les complexes BF3-monométhylamine ou monoéthylamine, BF3-méthyl-2 imidazole, BF3-phénol, le triéthylène diamine, le chlorure stannique, le chlorure d'aluminium, le chlorure de tri-phényl étain, le dilaurate de dibutyl étain, le nitrate d'uranyle, 1 acétylacétonate d'aluminium, le naphténate de cobalt. On peut aussi utiliser des produits tels que le vinyl-1 imidazole, le vinyl-1 méthyl-2 imidazole, leur polymère ou leurs copolymères. Il est également possible d'utiliser des catalyseurs bloqués tels que les complexes méthyl-2 imidazole — acide pyromellitique ou acide isocyanurique — des urées substituées telles que décrites dans le brevet EP O 108 712, des cétimines ou aldimines comme le NN'-dicinnamylidène, 1,6-hexanediamine ou les produits revendiqués dans le brevet FR 2 544 723, des hydrazides comme citées dans le brevet EP 106 635, des imidazoles comme dans les brevets EP O 124 482 ou DE 33 27 827, ou des oxydes d'amines. Les couches contenant le ou les copolymères auto-réticulables ou le ou les catalyseurs de réticulation peuvent contenir en outre divers adjuvants tels que des colloïdes, épaississants, agents tensio-actifs, agents dispersants, agents anti-oxydants, anti-UV, stabilisants, agents de tension, inhibiteurs de corrosion, agents de broyage, siccatifs, agents anti-peaux, agents antistatiques, agents anti-cratères, plastifiants, lubrifiants, agents anti-mousse, agents hydrofuges, oléofuges, cires naturelles ou synthétiques, fongicides.

Ces couches peuvent de même contenir des charges organiques ou minérales, telles que carbonate de calcium, silice, particules de verre, fibres de verre ou de carbone, talc, kaolin, alumine.

Enfin, ces couches peuvent contenir, de même, des pigments ou colorants minéraux ou organiques, solubles ou dispersés. A titre d'exemples non limitatifs, on peut citer comme pigments minéraux, le dioxyde de titane, le lithopone, le sulfate de baryum, le sulfate de calcium, le silicate basique de plomb, le chromate de zinc, l'oxyde de zinc, les oxydes de fer, le chromate de plomb, le bleu Outremer, l'oxyde vert de chrome, le rouge de Molybdène, le noir de carbone. Toujours à titre d'exemples non limitatifs, on peut citer comme pigments organiques, des colorants appartenant aux classes les plus diverses teïles que Azoïque, azométhiniques, anthraquinone, phtalocyanine, indigoïdes. Comme telles, on peut mentionner l'indanthrone pigmentaire (Colour Index no. 69800), le "CI Pigment Yellow 16" (no. 20040), le "CI Pigment Green 7" (no. 74260), le "CI Pigment Yellow 14" (no. 21095), le pigment disazoïque obtenu par copulation du dérivé tétrazoïque d'une mole de diamino-4-4'dichloro-3,3'-diphényle avec 2 moles de N-acétoacétyl-p-chloraniline, le vert de phtalocyanine de cuivre chloré, les bleus de phtalocyanine de cuivre α et β. Dans le même but, on peut utiliser des paillettes de métaux comme des paillettes d'aluminium.

Comme indiqué ci-dessus, les revêtements obtenus par le procédé selon l'invention, sont préparés à l'aide d'au moins deux couches alternées, l'une contenant au moins un catalyseur de réticulation, l'autre contenant au moins un copolymère d'auto-réticulation, ces couches étant appliquées sur un substrat de façon séparée, l'une après l'autre, dans un ordre indifférent avec, si possible, un séchage entre les deux applications. Plusieurs couches peuvent ainsi être déposées sur un substrat pour réaliser des revêtements de type "sandwiches". Dans ce cas, chaque couche contenant le ou les copolymères auto-réticulables est séparée par une intercouche contenant le ou les catalyseurs de réticulation. Les revêtements ainsi réalisés peuvent avoir une épaisseur allant de quelques microns à plusieurs millimètres.

Ces revêtements peuvent être appliqués sur divers substrats comme le métal, le bois, le verre, les matières plastiques. En particulier, ils peuvent être appliqués sur des substrats métalliques comme l'acier ou l'aluminium, avec ou sans couche d'apprêt, telle que les couches à base de phosphate de zinc ou de résines déposées par électrophorèse.

Dans le procédé selon l'invention, l'application des couches contenant le ou les copolymères auto-réticulables et/ou le ou les catalyseurs de réticulation peut être effectuée selon les techniques classiques comme la pulvérisation, le pistolage, le couchage, l'immersion, la brosse, le rouleau, le rideau ou l'arrosage. Après application et séchage de ces couches conformément au procédé selon l'invention, celles-ci subissent un traitement thermique de plusieurs minutes, généralement 10 à 120 minutes, aux températures relativement basses, définies précédemment.

Les revêtements préparés conformément au procédé selon l'invention sont dotés de bonnes tenues à l'eau et aux solvants. Ils présentent en outre de bonne caractéristique générales.

Les exemples qui vont suivrent, donnés à titre illustratif, permettront de mieux comprendre l'invention.

Dans ces exemples, le quantités de produits indiqués sont en parties en poids et les pourcentages sonten des % en poids.

Les exemples 1 à 6 concernent la préparation de copolymères auto-réticulables qui seront testés conformément au procédé selon l'invention dans les exemples 7 à 18.

## Exemple 1

Dans un réacteur muni d'un dispositif de chauffage, d'un condenseur à reflux, d'un agitateur, d'un thermomètre, d'une arrivée d'azote et d'une ampoule d'introduction de réactifs, on charge 393 parties d'acétate d'éthylglycol que l'on chauffe à 78°C, sous atmosphère d'azote.

Par ailleurs, on prépare un mélange de 123,7 parties de méthacrylate de glycidyle, de 35,4 parties d'acide méthacrylique, de 218,1 parties d'acrylate de butyle et de 212,1 parties de méthacrylate de méthyle dans lequel on dissout, en maintenant le mélange à une température inférieure à 15°C, 17,7 parties de peroxydicarbonate de bis-4-terbutylcyclohexyle.

Le mélange des monomères et du catalyseur est introduit par l'intermédiaire de l'ampoule, en deux heures, dans le réacteur maintenu à une température de 78 ± 1°C.

Après addition des monomères, un palier supplémentaire de 1 heure à la température de 78°C est maintenu avant refroidissement final.

La résine ainsi obtenue possède un extrait sec de 59,2% (mesuré par étuvage de 0,5 partie de résine durant une heure à 150°C), ce qui correspond à un rendement de copolymérisation de 97,6%, une viscosité à 20°C de 625 poises, une masse moléculaire moyenne en poids de 48 000 g et une température de transition vitreuse (ci-après dénommée Tg) de 20°C.

### Exemple 2

Dans un réacteur muni d'un dispositif de chauffage, d'un condenseur à reflux, d'un agitateur, d'un thermomètre, d'une arrivée d'azote et d'une ampoule d'introduction de réactifs, on charge 390,8 parties de méthylisobutylcétone que l'on chauffe à 78°C, sous atmosphère d'azote.

Par ailleurs, on prépare un mélange de 129,9 parties de méthacrylate de glycidyle, de 49,4 parties d'acide méthacrylique, de 34,5 parties de méthacrylate d'hydroxyéthyle, de 177,0 parties d'acrylate de butyle et de 183,9 parties de méthacrylate de méthyle dans lequel on dissout, en maintenant une température inférieure à 15°C, 20,1 parties de peroxydicarbonate de bis-4-tertiobutylhexyle.

Le mélange des monomères et du catalyseur est introduit par l'intermédiaire de l'ampoule en 45 minutes dans le réacteur maintenu à une température de 78 ± 1°C. Après addition des monomères, un palier complémentaire de 45 minutes à 78 ± 1°C est maintenu. Durant ce palier, une addition supplémentaire de 2,9 parties de peroxydicarbonate de bis-4-tertiobutylcyclohexyle est faite, goutte-à-goutte, en 15 minutes, 10 minutes après la fin d'introduction des réactifs, cela afin de parachever la réaction de copolymérisation des monomères. Le mélange réactionnel est ensuite refroidi.

La résine ainsi obtenue possède un extrait sec de 58,8% (mesuré par un étuvage de 0,5 partie de résine durant 1 heure à 150°C), ce qui correspond à un rendement de 98,3%, une viscosité à 20°C de 305 poises, une masse moléculaire moyenne en poids de 64 000 g et une Tg de 28°C.

### Exemple 3

Dans un réacteur muni d'un dispositif de chauffage, d'un condenseur à reflux, d'un agitateur, d'un thermomètre, d'une arrivée d'azote et d'une ampoule d'introduction de réactifs, on charge 376,2 parties de méthylisobutylcétone que l'on chauffe à 78°C, sous atmosphère d'azote. Par ailleurs, on prépare un mélange de 123,0 parties de méthacrylate de glycidyle, de 35,1 parties d'acide méthacrylique, de 216,8 parties d'acrylate de butyle et de 210,9 parties de méthacrylate de méthyle dans lequel on dissout, en maintenant une température inférieure à 15°C, 20,5 parties de peroxydicarbonate de bis-4-tertiobutylcyclohexyle.

Le mélange des monomères et du catalyseur est introduit par l'intermédiaire de l'ampoule, en 45 minutes, dans le réacteur maintenu à une température de 78 ± 1°C. Après addition des monomères, un palier complémentaire de 45 minutes à la température de 78°C est maintenu. Durant ce palier, une addition supplémentaire de 2,9 parties de peroxydicarbonate de bis-4-tertio-butylcyclohexyle dissout dans 14,6 parties de méthylisobutylcétone est faite goutte-à-goutte en 15 minutes, 10 minutes après la fin d'introduction des réactifs, cela afin de parachever la réaction de copolymérisation des monomères. Le mélange réactionnel est ensuite refroidi.

La résine ainsi obtenue possède un extrait sec de 59,5%, (mesuré par étuvage de 0,5 partie de résine durant une heure à 150°C), ce qui correspond à un rendement de copolymérisation de 90,2%, une viscosité à 20°C de 67 poises, une masse moléculaire moyenne en poids de 44 200 g et une Tg de 17°C.

### Exemple 4

Dans un réacteur muni d'un dispositif de chauffage, d'un condenseur à reflux, d'un agitateur, d'un thermomètre, d'une arrivée d'azote et de deux ampoules d'introduction de réactifs, on charge 293 parties de méthylisobutylcétone que l'on chauffe à 78°C sous atmosphère d'azote.

Par ailleurs, on prépare un mélange de 42,2 parties d'acrylamide en solution dans 94,6 parties de méthyléthylcétone que l'on introduit et maintient chaud dans la première ampoule d'introduction des réactifs. On prépare et on introduit dans la deuxième ampoule, un mélange de 136,8 parties de méthacrylate de glycidyle, de 199,6 parties d'acrylate de butyle et de 199,6 parties de méthacrylate de méthyle dans lequel on dissout en maintenant le mélange à une température inférieure à 15°C, 19,9 parties de peroxydicarbonate de bis-4-tertiobutylcyclohexyle.

Les deux mélanges sont alors simultanément introduits par l'intermédiaire des deux ampoules, en 45 minutes, dans le réacteur maintenu à une température de 80 ± 2°C. Après addition des monomères, un palier complémentaire de 45 minutes à la température de 80°C est maintenu. Durant ce palier, une addition supplémentaire de 2,9 parties de peroxydicarbonate de bis-4-tertio-butylcyclohexyle dissous dans 11,4 parties de méthylisobutylcétone est faite, goutte-à-goutte en 15 minutes, 10 minutes après la fin d'introduction des réactifs, afin de parachever la réaction de copolymérisation des monomères. Le mélange réactionnel est ensuite refroidi.

La résine ainsi obtenue possède unextrait sec de 59,3% (mesuré par étuvage de 0,5 partie de résine durant 1 heure à 150°C), ce qui correspond à un rendement de copolymérisation de 98,7%, une viscosité à 20°C de 210 poises, une masse moléculaire moyenne en poids de 16 800 g et une Tg de 41°C.

### Exemple 5

Dans un réacteur muni d'un dispositif de chauffage, d'un condenseur à reflux, d'un agitateur, d'un thermomètre, d'une arrivée d'azote et d'une ampoule d'introduction de réactifs, on charge 395,4 parties d'acétate d'éthylglycol que l'on chauffe à 80°C, sous atmosphère d'azote.

Par ailleurs, on prépare un mélange de 82,6 parties de méthacrylate de glycidyle, de 33,7 parties d'acide méthacrylique, de 261,5 parties d'acrylate de butyle et de 203,5 parties de méthacrylate de méthyle dans lequel on dissout, en maintenant le mélange à une température inférieure à 15°C, 23,3 parties de peroxydicarbonate de bis-4-tertiobutylcyclohexyle.

Le mélange des monomères et du catalyseur est introduit par l'intermédiaire de l'ampoule, en deux heures, dans le réacteur maintenu à une température de 80 ± 2°C. Après addition des monomères, un palier complémentaire de 1 heure à la température de 80°C est maintenu avant refroidissement final.

La résine ainsi obtenue possède un extrait sec de 58,9% (mesuré par étuvage de 0,5 partie de résine durant une heure à 150°C), ce qui correspond à un rendement de copolymérisation de 97,2%, une viscosité à 20°C de 78 poises, une masse moléculaire moyenne en poids de 34 600 g et une Tg de 9°C.

### Exemple 6

Dans un réacteur muni d'un dispositif de chauffage, d'un condenseur à reflux, d'un agitateur, d'un thermomètre, d'une arrivée d'azote et d'une ampoule d'introduction de réactifs, on charge 397,8 parties de xylène que l'on chauffe à 76°C sous atmosphère d'azote.

Par ailleur, on prépare un mélange de 78,g parties de méthacrylate d'hydroxyéthyle, de 78,9 parties de méthacrylate de glycidyle, de 181,3 parties de méthacrylate de méthyle, de 245,6 parties d'acrylate de butyle dans lequel on dissout, en maintenant le mélange à une température inférieure à 15°C, 17,5 parties de peroxydicarbonate de bis-4-tertiobutylcyclohexyle.

Le mélange des monomères et du catalyseur est introduit par l'intermédiaire de l'ampoule, en 2,5 heures dans le réacteur maintenu à une température de 76 ± 2°C. Après addition des monomères, un palier complémentaire de 1 heures à la température de 76°C est maintenu, avant refroidissement final.

La résine ainsi obtenue présente un extrait sec de 58,0% (mesuré par étuvage de 0,5 partie de résine durant une heure à 150°C), ce qui correspond à un rendement de copolymérisation de 96,3%, une viscosité à 20°C de 87 poises, une masse moléculaire moyenne en poids de 64 000 g et une Tg de 28°C.

### Exemple 7

Sur une plaque métallique phosphatée de dénomination commerciale PARCOBOND 1041 de PARKER, de 85 × 195 mm, on dépose, dans un premier temps, par pulvérisation, 600 milligrammes d'une solution à 2% dans le méthanol de méthyl-2 imidazole. Par évaporation naturelle du méthanol à température ambiante, on obtient un dépôt homogène de 12 milligrammes de produit pur.

A l'aide du filmographe ERICHSEN de 150 um, dans un deuxième temps, on dépose une seconde couche constituée à partir de la résine décrite dans l'exemple 1, rediluée par de l'acétate d'éthyglycol pour obtenir un extrait sec de 40% et une viscosité de 10 poises à 20°C. Cette composition présente une excellente stabilité au stockage: la viscosité n'est pas supérieure au double de celle du départ après 3 mois de stockage à température ambiante. On dépose ainsi 1,5 gramme de résine précédemment diluée, ce qui correspond à 0,6 gramme de résine sèche à 100% d'extrait sec; la teneur en méthyl-2 imidazole correspond ainsi à 2% de la teneur en copolymère acrylique de l'exemple 1.

Après 1/4 heure de préséchage à température ambiante, la plaque est déposée en étuve ventilée à 90 ± 1°C durant une période de 30 minutes, puis laissée au repos 24 heures à température ambiante.

Le revêtement ainsi obtenu par réticulation, présente les caractéristiques suivantes:

une épaisseur de 35 u.

une dureté au pendule de Persoz selon la norme NFT 30016 de 260 secondes.

une résisante à la détrempe au xylène supérieure à 5 minutes. Cette résistance est mesurée par le temps au bout duquel le maintien sur le film d'un coton fortement imbibé de xylène, permet le grattage même superficiel, à l'aide de l'ongle ou d'un bâtonnet de bois, d'une pellicule de film.

une résistance à la détrempe à l'acétone supérieure à 1 minute, mesurée à l'aide d'un mode opératoire identique.

on n'observe aucune modification, même légère du brillant et de l'aspect du film, après 500 heures d'immersion de l'éprouvette précédemment réalisée dans un bain d'eau distillée, maintenu à 40 ± 1°C, selon la norme NFT 30054.

A titre de comparaison la même résine (à savoir celle fabriquée dans l'exemple 1) diluée à 40% d'extrait sec dans l'acétate d'éthylglycol a été appliquée sans dépôt préalable de catalyseur; les caractéristiques du revêtement ainsi obtenu dans-les mêmes conditions sont insuffisantes.

une dureté Persoz de 230 secondes.

des résistances à la détrempe au xylène ou à l'acétone nulles.

un gonflement du film après 100 heures d'immersion.

Toujours à titre de comparaison la même résine (à savoir celle fabriquée dans l'exemple 1), diluée à 40% d'extrait sec dans l'acétate d'éthylglycol a été appliquée sans dépôt préalable du catalyseur, mais par mélange de celui-ci avec la résine, en quantité équivalente à celle qui aurait étédéposée sur la plaque. Après un traitement thermique identique, les caractéristiques du revêtement ainsi obtenu sont identiques à celles de l'essai réalisé conformément à la présente invention:

une dureté Persoz de 270 secondes.

une résistance à la détrempe au xylène supérieure à 6 minutes.

une résistance à la détrempe à l'acétone supérieure à 1 minute.

aucune modification du brillant et de l'aspect du film après 500 heures d'immersion.

Malheureusement, la stabilité au stockage du mélange préparé dans cet exemple est limitée à 48 heures à une température de 20°C au bout desquelles on observe un prise en masse. En conséquence, la commercialisation de ce mélange sous la forme d'un système "un pot" n'est pas envisageable en raison de sa stabilité insuffisante à température ambiante du fait qu'il contient le catalsyseur.

### Exemple 8

On reprend le mode opératoire de l'exemple 7 en y apportant les modifications suivantes: on augmente la quantité de méthyl-2 imidazole déposée, de 12 à 30 milligrammes ce qui correspond à une teneur en sec sur sec de 5%, on remplace la résine décrite dans l'exemple 1 par celle décrite dans l'exemple 2 et on diminue la température de cuisson de 90 à 75°C, toutes autres choses étant par ailleurs égales.

Le revêtement ainsi obtenu par réticulation présente les caractéristiques suivantes: une dureté Persoz de 235 secondes, une tenue à la détrempe au xylène supérieure à 8 minutes, une tenue à la détrempe à l'acétone supérieure à 30 secondes, sans modification ni du brillant ni de l'aspect du film après 500 heures d'immersion dans l'eau à 40°C.

La comparaison avec une deuxième composition obtenue en incorporant par mélange 30 milligrammes de méthyl-2 imidazole au copolymère décrit dans l'exemple 2, donne après un traitement thermique identique, des caractéristiques de film réticulé voisines de celles de la présente invention: une dureté Persoz de 260 secondes, une tenue à la détrempe au xylène supérieure à 8 minutes, une tenue à la détrempe à l'acétone supérieure à 30 secondes, pour un aspect et un brillant sans variation après 500 heures de bain à 40°C.

Par contre, cette deuxième composition voit sa stabilité au stockage limitée à 1 jour à 20°C.

### Exemple 9

On reprend le mode opératoire de l'exemple 7 en y apportant les modifications suivantes: on augmente la quantité de méthyl-2 imidazole de 12 à 30 milligrammes ce qui correspond à une teneur en sec sur sec de 5%, on remplace la résine décrite dans l'exemple 1 par celle décrite dans l'exemple 6 et on augmente la température de cuisson de 90 à 110°C, toutes autres choses étant par ailleurs égales.

La stabilité au stockage de cette composition est supérieure à 3 mois et le revêtement ainsi obtenu par réticulation présente les caractéristiques suivantes: dureté Persoz de 270 secondes, tenue à la détrempe au xylène de 4 minutes, tenue à la détrempe à l'acétone de 15 secondes, sans modification du brillant ni de l'aspect du film après 500 heures d'immersion dans l'eau à 40°C.

La même composition appliquée sans dépôt préalable de catalyseur ne permet pas d'obtenir un revêtement qui présente une dureté Persoz suffisante. En outre, elle est instantanément soluble dans le xylène et dans l'acétone, et présente une rapide altération de son aspect de surface,

après une immersion de 24 heures dans un bain d'eau à 40°C.

### Exemple 10

On reprend le mode opératoire de l'exemple 7, en remplaçant la résine décrite dans l'exemple 1 par celle décrite dans l'exemple 4, toutes autres choses étant par ailleurs égales.

La stabilité au stockage de cette composition conforme à la présente invention, est particulièrement bonne car l'évolution de la viscosité n'est que de 4% mesurée au test accéléré qui est le rapport de la viscosité obtenue après 7 jours de séjour à 40°C à la viscosité de départ.

Le revêtement ainsi obtenu par réticulation présente les caractéristiques suivantes: une dureté Persoz de 270 secondes, une tenue à la détrempe au xylène de 15 minutes, une tenue à la détrempe à l'acétone de 0,5 minutes, sans aucune modification du brillant et de l'aspect du film après le test de tenue au bain d'eau à 40°C.

### Exemple 11

On reprend la composition et le mode opératoire de l'exemple en augmentant la quantité de méthyl-2 imidazole déposée de 12 à 18 milligrammes, ce qui correspond à une augmentation de 2 à 3% calculés en sec sur sec et en remplaçant le copolymère décrit dans l'exemple 1 par celui décrit dans l'exemple 5, toutes autres choses étant par ailleurs égales.

Les caractéristiques de la composition ainsi réticulée sont une dureté Persoz de 205 secondes, une tenue à la détrempe au xylène de 1,5 minutes, une tenue à la détrempe à l'acétone de 20 secondes, sans altération visible du brillant et de l'état de surface du film après immersion 500 heures dans de l'eau à 40°C.

### Exemple 12

On reprend la composition et le mode opératoire de l'exemple 7, en y apportant les modifications suivantes: on remplace le dépôt de 12 mg de méthyl-2 imidazole par un dépôt de 30 milligrammes de pipérazine, ce qui correspond à une teneur en sec sur sec de 5% ainsi que le copolymère décrit dans l'exemple 1 par celui décrit dans l'exemple 3, toutes autres choses étant par ailleurs égales.

Le revêtement ainsi obtenu par réticulation de cette composition possède les caractéristiques suivantes: une dureté Persoz de 275 secondes, une tenue à la détrempe au xylène de 6 minutes, une tenue à la détrempe à l'acétone de 30 secondes, sans modification apparente du brillant et de l'état de surface du film après 100 heures d'immersion dans l'eau à 40°C.

Par contre, une deuxième composition obtenue par mélange du copolymère précédent et de la quantité indiquée de pipérazine ne présente qu'une stabilité au stockage limitée à 12 heures.

### Exemple 13

On reprend la composition et le mode opératoire de l'exemple 12 en remplaçant la piperazine par de la diméthylbenzylamine, toutes autres choses étant par ailleurs égales.

Le revêtement ainsi obtenu par réticulation de cette composition présente les caractéristiques suivantes: une dureté Persoz de 260 secondes, une tenue à la détrempe au xylène de 3 minutes, une tenue à la détrempe à l'acétone de 30 secondes, sans modification apparente du brillant et de l'état de surface du film après 200 heures d'immersion dans de l'eau à 40°C.

Par contre, une deuxième composition obtenue par mélange du copolymère précédent et de la quantité indiquée de diméthylbenzylamine ne présente qu'une stabilité au stockage limitée à 24 heures.

### Exemple 14

On reprend la composition et le mode opératoire décrit dans l'exemple 7 en imposant un traitement thermique de 10 minutes à 110°C, toutes autres choses étant par ailleurs égales.

Le revêtement ainsi obtenu par réticulation de cette composition présente les caractéristiques suivantes: une dureté Persoz de 230 secondes, une tenue à la détrempe au xylène de 3 minutes, une tenue à la détrempe à l'acétone de 30 secondes, sans altération visible du brillant et de l'état de surface du film après 500 heures d'immersion dans un bain d'eau à 40°C.

Par contre, cette même composition appliquée sans dépôt préalable de catalyseur ne permet d'obtenir un revêtement quine présente une dureté Persoz que de 165 secondes, est instantanément soluble dans le xylène et dans l'acétone, et présente une altération de son aspect de surface après une immersion de 50 heures dans un bain à 40°C.

### Exemple 15

On reprend la composition et le mode opératoire décrits dans l'exemple 7 en effectuant l'essai supplémentaire modifié suivant, toutes autres choses étant par ailleurs égales: le dépôt du méthyl-2 imidazole est effectué en même quantité, mais on remplace la pulvérisation sur la plaque c'est-à-dire en dessous du copolymère, par une pulvérisation au dessus du copolymère préalablement préséché 15 minutes à température ambiante.

Le revêtement ainsi obtenu par réticulation présente les caractéristiques suivantes: une dureté Persoz de 275 secondes, une tenue à la détrempe au xylène de 3,5 minutes, une tenue à la détrempe à l'acétone de 45 secondes, sans modification de l'aspect de surface et du brillant après immersion de 500 heures dans un bain d'eau à 40°C.

### Exemple 16

On reprend la composition et le mode opératoire décrits dans l'exemple 15 en effectuant l'essai supplémentaire modifié suivant, toutes autres choses étant par ailleurs égales: la quantité de méthyl-2 imidazole est doublée de 12 à 24 milligrammes et une deuxième application du copolymère décrit dans l'exemple 1 est effectuée, suivie d'un nouveau préséchage de 15 minutes à température ambiante, de façon à ce que le méthyl-2 imidazole soit entre les couches du copolymère, à une teneur globale maintenue à 2% en sec sur sec par rapport audit copolymère.

Le revêtement ainsi obtenu par réticulation présente les caractéristiques suivantes: une dureté Persoz de 160 secondes, une tenue à la détrempe au xylène de 20 minutes, une tenue à la détrempe à l'acétone de 30 secondes, sans modification de l'aspect de surface et du brillant après immersion de 5D0 heures dans un bain d'eau à 40°C.

### Exemple 17

On reprend la composition et le mode opératoire décrits dans l'exemple 7 en effectuant la modification suivante: on dépose et on présèche une succession totale de 8 couches en alternant une couche de la quantité de méthyl-2 imidazole et une couche de celle du copolymère de l'exemple 1.

Toutes autres choses étant par ailleurs égales, on obtient un revêtement réticulé qui présente les caractéristiques suivantes: une dureté Persoz de 120 secondes, une tenue à la détrempe au xylène de 12 minutes, une tenue à la détrempe à l'acétone de 30 secondes, sans modification de l'aspect de surface ni du brillant après immersion de 500 heures dans un bain d'eau à 40°C.

### Exemple 18

On reprend la composition et le mode opératoire décrits dans l'exemple 16 en effectuant la modification suivante: on remplace le dépôt par pulvérisation de la quantité indiquée de solution de méthyl-2 imidazole à 20% dans le méthanol par le dépôt à l'aide du filmographe Erichsen de 150 um d'une solution réalisée à partir de 3 grammes d'acétobutyrate de cellulose, 20 grammes de toluène, 3 grammes de méthyl-2 imidazole, en solution à 20% dans le méthanol. Chacun des deux dépôts correspond à une quantité identique de méthyl-2 imidazole pur.

Toutes autres choses étant par ailleurs égales, le revêtement ainsi obtenu par réticulation présente les caractéristiques suivantes: une dureté Persoz de 40 secondes, une tenue à la détrempe au xylène de 4 minutes, une tenue à la détrempe à l'acétone de 3 minutes, sans modification de l'aspect de surface et du brillant après immersion de 500 heures dans un bain d'eau à 40°C.

### Revendications

1. Procédé de réticulation de copolymères autoréticulables à base de monomères (méth)acryliques essentiellement caractérisé en ce que sur ou avant dépôt d'une couche contenant au moins un catalyseur de réticulation, on applique une seconde couche contenant au moins un copolymère auto-réticulable, en suspension ou en solution dans un milieu aqueux ou dans un solvant organique, et en ce que l'on soumet ces deux couches à un traitement thermique de manière à provoquer la réticulation de la couche contenant le ou les copolymères.

2. Procédé selon la revendication 1, caractérisé en ce que la température du traitement thermique est comprise entre 30 et 110°C.

3. Procédé selon la revendication 2, caractérisé en ce que la température du traitement thermique est comprise entre 60 et 90°C.

4. Procédé selon d'une quelconque des revendications 1 à 3, caractérisé en ce que la couche contenant le ou les copolymères autoréticulables sont présentés sous forme de solutions ou de dispersions en milieu solvant ou aqueux, le(s)-dit(s) copolymères étant obtenu(s) à partir de:

5 à 40% en poids d'un ou plusieurs monomères possédant une liaison éthylénique et au moins un groupe glycidyle,

1 à 20% en poids d'un ou plusieurs monomères possédant une liaison éthylénique et un ou plusieurs groupes fonctionnels tels que les groupes hydroxys, caboxyles, amines, amines mono et disubstituées, amides, aldéhydes, anhydrides,

40 à 94% en poids d'un ou plusieurs comonomères possédant au moins une double liaison éthylénique, ledit copolymère ayant une masse moléculaire moyenne en poids comprise entre 1000 et 80000.

5. Procédé selon la revendication 4, caractérisé en ce que le copolymère a une masse moléculaire moyenne en poids comprise entre 1000 et 50000.

6. Application du procédé selon la revendication 1 à un système comprenant plusieurs couches (A) contenant un ou plusieurs copolymères autoréticulables, lesdits copolymères autoréticulables étant identiques ou différents, et, interposée entre les couches (A), une intercouche contenant au moins un catalyseur de réticulation.

7. Application du procédé selon la revendication 1 à la préparation de pièces moulées, d'imprégnation, d'enduction, d'impression, d'adhésifs, de liants, d'apprêts, de peintures et de vernis.

**Patentansprüche**

1. Verfahren zur Vernetzung von selbstvernetzbaren Copolymeren auf Basis von (Meth)acryl-Monomeren, im wesentlichen dadurch gekennzeichnet, daß man auf eine oder vor der Ablagerung einer Schicht, die mindestens einen Vernetzungskatalysator enthält, eine zweite Schicht aufbringt, die mindestens ein selbst vernetzbares Copolymer in Suspension oder in Lösung in einem wäßrigen Milieu oder einem organischen Lösungsmittel enthält, und daß man diese beiden Schichten einer solchen Wärmebehandlung unterzieht, daß die vernetzung der das oder die Copolymer(e) enthaltenden Schicht herbeigeführt wird.

2. Verfahren nach Anspruch 1, dadurch gekennzeichnet, daß die Temperatur der Wärmebehandlung zwischen 30° und 110°C liegt.

3. Verfahren nach Anspruch 2, dadurch gekennzeichnet, daß die Temperatur der Wärmebehandlung zwischen 60° und 90°C liegt.

4. Verfahren nach irgendeinem der Ansprüche 1 bis 3, dadurch gekennzeichnet, daß die das oder die selbstvernetzbare(n) Copolymer(e) enthaltende Schicht in Form von Lösungen oder Dispersionen im Lösungsmittelmilieu oder wäßrigen Milieu dargeboten wird, wobei das bzw. die genannte(n) Copolymer(e) erhalten wird (werden) aus:

5 bis 40 Gew.-% eines oder mehrerer eine äthylenische Bindung und mindestens eine Glycidylgruppe enthaltender Monomere,

1 bis 20 Gew.-% eines oder mehrerer eine äthylenische Bindung und eine oder mehrere funktionelle Gruppen, wie die Hydroxy-, Carboxyl-, Amin-, mono- und disubstituierten Amin-, Amid-, Aldehyd- und Anhydrid-Gruppen, enthaltender Monomere,

40 bis 94 Gew.-% eines oder mehrerer mindestens eine äthylenische Doppelbindung enthaltender Comonomere, wobei das genannte Copolymer eine Gewichtsmittel-Molekularmasse zwischen 1000 und 80000 besitzt.

5. Verfahren nach Anspruch 4, dadurch gekennzeichnet, daß das Copolymer eine Gewichtsmittel-Molekularmasse zwischen 10000 und 50000 besitzt.

6. Anwendung des verfahrens nach Anspruch 1 auf ein System, das mehrere Schichten (A) umfaßt, die ein oder mehrere identische oder verschiedene selbstvernetzbare Copolymere sowie eine zwischen den Schichten (A) angeordnete Zwischenschicht enthalten, die mindestens einen Vernetzungskatalysator enthält.

7. Anwendung des Verfahres nach Anspruch 1 bei der Herstellung von Formteilen, imprägnierten Teilen, beschichteten Teilen, bedruckten Teilen, Klebemitteln, Bindemitteln, Appreturmitteln, Farben und Lacken.

**Claims**

1. Crosslinking process for self-crosslinking copolymers based on (meth)acrylic monomers essentially characterized in that, on or before the deposition of a layer containing at least one crosslinking catalyst, a second layer containing at least one self-crosslinking copolymer in suspension or solution in an aqueous medium or in an organic solvent is applied, and in that these two layers are subjected to a heat treatment such that crosslinking of the layer containing the copolymer(s) is initiated.

2. Process according to Claim 1, characterized in that the temperature of the heat treatment is between 30 and 110°C.

3. Process according to Claim 2, characterized in that the temperature of the heat treatment is between 60 and 90°C.

4. Process according to any one of Claims 1 to 3, characterized in that the layer containing the self-crosslinking copolymer(s) is in the form of solutions or dispersions in a solvent medium or aqueous medium, the said copolymer(s) having been obtained from:

5 to 40% by weight of one or more monomers having one ethylenic bond and at least one glycidyl group,

1 to 20% by weight of one or more monomers having one ethylenic bond and one or more functional groups such as hydroxyl, carboxyl, amine, mono- and di-substituted amine, amide, aldehyde and anhydride groups, and

40 to 94% by weight of one or more comonomers having at least one ethylenic double bond, the said copolymer having a weight average molecular mass of between 1,000 and 80,000.

5. Process according to Claim 4, characterized in that the copolymer has a weight average molecular mass of between 10,000 and 50,000.

6. Use of the process according to Claim 1, for a system comprising several layers (A) which contain one or more self-crosslinking copolymers, the said self-crosslinking copolymers being identical or different, and, interposed between the layers (A), an interlayer containing at least one crosslinking catalyst.

7. Use of the process according to Claim 1, for the preparation of moulded, impregnated, coated and printed articles, adhesives, binders, finishes, paints and varnishes.